Europäisches Patentamt

European Patent Office

Office européen des brevets

(11) Veröffentlichungsnummer: **0 258 685**
**A2**

(12) **EUROPÄISCHE PATENTANMELDUNG**

(21) Anmeldenummer: 87111504.4

(22) Anmeldetag: 08.08.87

(51) Int. Cl.⁴ **C08K 3/32** , C08K 5/34 ,
C08K 9/08

(30) Priorität: 25.08.86 DE 3628797
16.06.87 DE 3720094

(43) Veröffentlichungstag der Anmeldung:
09.03.88 Patentblatt 88/10

(84) Benannte Vertragsstaaten:
AT BE CH DE FR GB IT LI LU NL SE

(71) Anmelder: HOECHST AKTIENGESELLSCHAFT
Postfach 80 03 20
D-6230 Frankfurt am Main 80(DE)

(72) Erfinder: Staendeke, Horst, Dr.
Alte Honrather Strasse 22
D-5204 Lohmar(DE)
Erfinder: Scharf, Daniel, Dr.
120 Adirondack Drive
East Greenwich Rhode Island 02818(US)

(54) Flammwidrige polymere Massen.

(57) Die Erfindung betrifft flammwidrige polymere Massen, die ein Intumeszenz-Flammschutzsystem aus einer Phosphorkomponente und einer organischen Stickstoffkomponente enthalten, welche dadurch gekennzeichnet sind, daß das Flammschutzsystem aus einem Zweiergemisch aus gegebenenfalls mikroverkapseltem Ammoniumpolyphosphat und Tris-(2-hydroxyethyl)-isocyanurat gebildet wird.

EP 0 258 685 A2

## Flammwidrige polymere Massen

Die vorliegende Erfindung betrifft flammwidrige polymere Massen, die ein Intumeszenz-Flammschutzsystem aus einer Phosphorkomponente und einer organischen Stickstoffkomponente enthalten.

Aus der US-PS 4 140 660 ist bekannt, Phosphonsäurederivate der Isocyanursäure als Flammschutzmittel für Polyurethane einzusetzen. In der US-PS 4 001 177 wird eine Kombination von Melamin und Derivaten der Isocyanursäure zur flammwidrigen Ausrüstung von Polyamiden beschrieben.

Die Verwendung eines Intumeszenz-Gemisches für die flammwidride Ausrüstung von Polyolefinen wird erstmalig in der US-PS 3 810 862 beansprucht, wobei ein Gemisch aus Ammoniumpolyphosphat, Melamin und Dipentaerythrit oder ein Gemisch aus Melaminpyrophosphat und Dipentaerythrit zum Einsatz kommen. Schließlich wird der Gedanke der Intumeszenz-Mischungen als flammwidrige Komponenten für Polyolefine in der DE-OS 28 00 891 auf Ammoniumpolyphosphat, Melamin und Polyamid 6 (Beispiel 6) und in der DE-OS 28 39 710 auf eine Reihe weiterer Dreiergemische ausgedehnt, wie insbesondere Ammoniumpolyphosphat, Melamin und Tris-(2-hydroxyethyl)-isocyaurat (Beispiele 2, 5, 6, 7, 8), Ammoniumpolyphosphat, Pentaerythrit bzw. Tripentaerythrit und Tris-(2-hydroxethyl)-isocyanurat (Beispiele 4, 9) sowie Ammoniumpolyphosphat, Cyanursäurs und Tris(2-hydroxethyl)-isocyanurat (Beispiele 13, 14). Aus der US-PS 4 461 862 ist ferner bekannt, eine Kombination aus Ammoniumpolyphosphat und dem Reaktionsprodukt einer Sauerstoffsäure des Phosphors msit einem Hydroxyalkylderivat der Isocyanursäure zu verwenden.

Überraschenderweise wurde nun gefunden, daß auch das Zweiergemisch Ammoniumpolyphosphat und Tris-(2-hydroxyethyl)-isocyanurat beim Einsatz in Polyolefinen einen ausgezeichneten Flammschutzeffekt entfaltet. Dies war deshalb überraschend, weil die übrigen Komponenten der eingangs aufgeführten Dreiersysteme bei Verwendung in ammoniumpolyphosphathaltigen Zweiersystemen keinerlei Flammschutzeffektivität zeigen (siehe Vergleichsbeispiele 1 - 12).

Im einzelnen ist die Erfindung nunmehr dadurch gekennzeichnet, daß das Flammschutzsystem aus einem Zweiergemisch aus gegebenenfalls mikroverkapseltem Ammoniumpolyphosphat und Tris-(2-hydroxyethyl)-isocyanurat gebildet wird.

Die flammwidrigen polymeren Massen der Erfindung können bevorzugt und wahlweise dadurch gekennzeichnet sein, daß

a) das Ammoniumpolyphosphat o,5 bis 25 Masse% eines wasserunlöslichen, gegebenenfalls gehärteten Kunstharzes, welches die einzelnen Ammonimpolyphosphatteilchen umhüllt, enthält;

b) das Ammoniumpolyphosphat 0,5 bis 25 Masse% eines Reaktionsproduktes aus einem Polyisocyanat mit einem Carbodiimidisierungskatalystor, wobei das Polycarbodiimid die einzelnen Ammoniumpolyphosphatteilchen umhüllt, enthält;

c) das Ammoniumpolyphosphat 0,5 bis 25 Masse% eines Reaktionsproduktes aus einem Polyisocyanat und einer Polyhydroxyverbindung, wobei das gebildets Polyurethan die einzelnen Ammoniumpolyphosphatteilchen umhüllt, enthält;

d) das Ammoniumpolyphosphat 0,5 bis 25 Masse% eines Reaktionsproduktes aus einem Polyisocyanat mit einem Trimerisierungskatalysator, wobei das gebildete Polyisocyanurat die einzelnen Ammoniumpolyphosphatteilchen umhüllt, enthält;

e) das Ammoniumpolyphosphat 0,5 bis 25 Masse% eines Reaktionsproduktes aus einem Polyisocyanat und Wasser, wobei der gebildete Polyharnstoff die einzelnen Ammoniumpolyphosphatteilchen umhüllt, enthält;

f) das Ammoniumpolyphosphat 0,5 bis 25 Masse% eines gehärteten Melamin/Formaldehyd-Harzes, wobei das Melamin/Formaldehyd-Harz die einzelnen Ammoniumpolyphosphatteilchen umhüllt, enthält;

g) das Ammoniumpolyphosphat 0,5 bit 25 Masse% eines gehärteten Epoxidharzes, wobei das Epoxidharz die einzelnen Ammoniumpolyphosphatteilchen umhüllt, enthält;

h) das Flammschutzsystem aus 80 bis 50 Masse% Ammoniumpolyphosphat und 20 bis 50 Masse% Tris-(2-hydroxyethyl)-isocyanurat besteht;

i) ein frei-fließendes pulverförmiges, in Wasser schwer lösliches Ammoniumpolyphosphat der Formel $(NH_4PO_3)_n$, wobei n 200 bis 1000, vorzugsweise etwa 700, ist, eingesetzt wird;

j) das Ammoniumpolyphosphat eine Teilchengröße von > 99 % < 45 μm besitzt;

k) sie 15 bis 40 Masse% an dem Flammschutzsystem enthalten;

l) sie Thermoplaste sind;

m) sie Polyolefine sind.

Die nachfolgenden Beispiele und Tabellen sollen die Erfindung näher erläutern, ohne daß diese jedoch auf den Gegenstand der Beispiele beschränkt ist.

Beispiel 1 (Vergleich)

In einem SPANGENBERG-Intensivmischer (20 l Inhalt) wurden
5000 g ®HOSTALEN PPU 0180 P
(HOECHST AKTIENGESELLSCHAFT, Frankfurt)
-es handelt sich um ein Polypropylenpulver mit einem Schmelzindex MFI 230/5 von ca. 55 g/10 min -
1500 g ®Exolit 422
(HOECHST AKTIENGESELLSCHAFT, Frankfurt)
-es handelt sich um ein feinkörniges, in Wasser schwer lösliches Ammoniumpolyphosphat der Formel
$(NH_4PO_3)_n$, wobei n ~ 700 ist; die Teilchengröße des Ammoniumpolyphosphats beträgt > 99 % < 45 $\mu$m -
500 g Melamin
100 g ®Kronos CL 220
(Kronos Titan GmbH, Leverkusen)
-es handelt sich um ein Titandioxidpigment vom Rutil-Typ -
10 g Calciumstearat
10 g ®Hostanox 03
(HOECHST AKTIENGESELLSCHAFT, Frankfurt)
-es handelt sich um ein Antioxidans auf Basis mehrkerniger Phenole -
10 g ®Hostanox SE 10
(HOECHST AKTIENGESELLSCHAFT, Frankfurt)
-es handelt sich um ein Antioxidans auf Basis von Dialkylsulfiden -
10 g ®Hostanox PAR 24
(HOECHST AKTIENGESELLSCHAFT, Frankfurt)
-es handelt sich um ein aromatisches Phosphit [Tris-(2,4-di-tert.-butylphenol)-phosphit] -
gemischt, in einem WEBER-Kleinextruder (20 mm Schneckendurchmesser) bei 180 - 200°C extrudiert und mit einem DREHER-Laborgranulator granuliert.

Aus dem getrockneten Granulat wurden anschließend in einer dampfbeheizten BECKER-VAN-HÜLLEN-Presse bei einer Temperatur von 195°C und einem Druck von 2 - 3 bar (5 -10 min) bzw. 300 bar (2 min) Testplatten von 1,6 mm und 3,2 mm Dicke hergestellt.

Die Prüfung des Brandverhaltens wurde nach der Vorschrift von Underwriters Laboratories "Test for Flammability of Plastic Material-UL 94" in der Fassung vom 2.5.1975 an Prüfkörpern von 127 mm Länge, 12,7 mm Breite und 1,6 mm bzw. 3,2 mm Dicke vorgenommen.

Der Sauerstoffindex wurde in einer modifizierten Apparatur in Anlehnung an ASTM-D 2863 bestimmt.

Die Ergebnisse der Brandprüfungen sind in Tabelle 1 aufgeführt.


Beispiel 2 (Vergleich)

Es wurde analog Beispiel 1 gearbeitet, wobei jedoch
1000 g ®Exolit 422 und
1000 g Melamin
eingesetzt wurden.

Die Ergebnisse der Brandprüfungen sind in Tabelle 1 aufgeführt.


Beispiel 3 (Vergleich)

Es wurde analog Beispiel 1 gearbeitet, wobei jedoch
500 g ®Exolit 422 und
1500 g ®Melamin
eingesetzt wurden.

Die Ergebnisse der Brandprüfungen sind in Tabelle 1 aufgeführt.

Beispiel 4 (Vergleich)

Es wurde analog Beispiel 1 gearbeitet, wobei jedoch anstelle von Melamin
500 g Cyanursäure
eingesetzt wurden.
Die Ergebnisse der Brandprüfungen sind in Tabelle 1 aufgeführt.

Beispiel 5 (Vergleich)

Es wurde analog Beispiel 2 gearbeitet, wobei jedoch anstelle von Melamin
1000 g Cyanursäure
eingesetzt wurden.
Die Ergebnisse der Brandprüfungen sind in Tabelle 1 aufgeführt.

Beispiel 6 (Vergleich)

Es wurde analog Beispiel 3 gearbeitet, wobei jedoch anstelle von Melamin
1500 g Cyanursäure
eingesetzt wurden.
Die Ergebnisse der Brandprüfungen sind in Tabelle 1 aufgeführt.

Beispiel 7 (Vergleich)

Es wurde analog Beispiel 1 gearbeitet, wobei jedoch anstelle von Melamin
500 g Melamincyanurat
eingesetzt wurden.
Die Ergebnisse der Brandprüfungen sind in Tabelle 2 aufgeführt.

Beispiel 8 (Vergleich)

Es wurde analog Beispiel 2 gearbeitet, wobei jedoch anstelle von Melamin
1000 g Melamincyanurat
eingesetzt wurden.
Die Ergebnisse der Brandprüfungen sind in Tabelle 2 aufgeführt.

Beispiel 9 (Vergleich)

Es wurde analog Beispiel 3 gearbeitet, wobei jedoch anstelle von Melamin
1500 g Melamincyanurat
eingesetzt wurden.
Die Ergebnisse der Brandprüfungen sind in Tabelle 2 aufgeführt.

Beispiel 10 (Vergleich)

Es wurde analog Beispiel 1 gearbeitet, wobei jedoch anstelle von Melamin
500 g ®Madurit MW 909
(HOECHST AKTIENGESELLSCHAFT, Frankfurt)
in Form des bei 180°C/2 Std. ausgehärteten Melamin/Formaldehyd-Harzes eingesetzt wurden.
Beim ®Madurit MW 909 handelt es sich um ein nicht plastifiziertes Melamin/Formaldehyd-Harz, das als weißes Pulver angeboten wird. Seine 50 masse-%ige Lösung hat eine dynamische Viskosität von ca. 30 mPa•s, einen pH-Wert von 9,0 - 10,0 und eine Dichte (bei 20°C) von 1,21 -1,225 g/ml.
Die Ergebnisse der Brandprüfungen sind in Tabelle 2 aufgeführt.

Beispiel 11 (Vergleich)

Es wurde analog Beispiel 2 gearbeitet, wobei jedoch anstelle von Melamin
1000 g ®Madurit MW 909
in Form des bei 180°C/2 Std. ausgehärteten Melamin/Formaldehyd-Harzes eingesetzt wurden.
Die Ergebnisse der Brandprüfungen sind in Tabelle 2 aufgeführt.


Beispiel 12 (Vergleich)

Es wurde analog Beispiel 3 gearbeitet, wobei jedoch anstelle von Melamin
1500 g ®Madurit MW 909
in Form des bei 180°C/2 Std. ausgehärteten Melamin/Formaldehyd-Harzes eingesetzt wurden.
Die Ergebnisse der Brandprüfungen sind in Tabelle 2 aufgeführt.


Beispiel 13 (erfindungsgemäß)

Es wurde analog Beispiel 1 gearbeitet, wobei jedoch anstelle von Melamin
500 g Tris(2-hydroxyethyl)-isocyanurat (THEIC)
eingesetzt wurden.
Die Ergebnisse der Brandprüfungen sind in der Tabelle 2 aufgeführt.


Beispiel 14 (erfindungsgemäß)

Es wurde analog Beispiel 2 gearbeitet, wobei jedoch anstelle von Melamin
1000 g Tris(2-hydroxyethyl)isocyanurat (THEIC)
eingesetzt wurden.
Die Ergebnisse der Brandprüfungen sind in Tabelle 3 aufgeführt.


Beispiel 15 (erfindungsgemäß)

Es wurde analog Beispiel 3 gearbeitet, wobei jedoch anstelle von Melamin
1500 g Tris(2-hydroxyethyl)-isocyanurat (THEIC)
eingesetzt wurden.
Die Ergebnisse der Brandprüfungen sind in Tabelle 3 aufgeführt.


Beispiel 16 (erfindungsgemäß)

Es wurde analog Beispiel 1 gearbeitet, wobei jedoch
1312,5 g ®Exolit 422 und (anstelle von 500 g Melamin)
437,5 g THEIC
eingesetzt wurden.
Die Ergebnisse der Brandprüfungen sind in Tabelle 3 aufgeführt.


Beispiel 17 (erfindungsgemäß)

Es wurde analog Beispiel 1 gearbeitet, wobei jedoch 875 g ®Exolit 422 und (anstelle von 500 g Melamin)
875 g THEIC
eingesetzt wurden.
Die Ergebnisse der Brandprüfungen sind in Tabelle 3 aufgeführt.

Beispiel 18 (erfindungsgemäß)

Es wurde analog Beispiel 1 gearbeitet, wobei jedoch
1125 g ®Exolit 422 und (anstelle von 500 g Melamin)
375 g THEIC
eingesetzt wurden.
Die Ergebnisse der Bandprüfungen sind in Tabelle 3 aufgeführt.

Beispeil 19 (erfindungsgemäß)

Es wurde analog Beispiel 1 gearbeitet, wobei jedoch 750 g ®Exolit 422 und (anstelle von 500 g Melamin
750 g THEIC
eingesetzt wurden.
Die Ergebnisse der Brandprüfungen sind in Tabelle 3 aufgeführt.

Beispiel 20 (erfindunsgemäß)

Es wurde analog Beispiel 16 gearbeitet, wobei jedoch anstelle von ®Exolit 422
1312,5 g ®Exolit 462
eingesetzt wurden.
Das ®Exolit 462 ist ein mikroverkapseltes Ammoniumpolyphosphat, das nach dem Verfahren der DE-OS 35 31 500 hergestellt wurde und etwa 10 Masse% Kapselmaterial bestehend aus einem gehärteten Melamin-Formaldehydharz enthält.
Die Ergebnisse der Brandprüfungen sind in Tabelle 4 aufgeführt.

Beispiel 21 (erfindungsgemäß)

Es wurde analog Beispiel 18 gearbeitet, wobei jedoch anstelle von ®Exolit 422
1125 g ®Exolit 462
eingesetzt wurden.
Die Ergebnisse der Brandprüfungen sind in Tabelle 4 aufgeführt.

Beispiel 22 (erfindungsgemäß)

Es wurde analog Beispiel 16 gearbeitet, wobei jedoch anstelle von ®Exolit 422
1312,5 g ®Exolit 470
eingesetzt wurden.
Das ®Exolit 470 ist ein mikroverkapseltes Ammoniumpolyphosphat, das nach dem Verfahren der DE-OS 35 26 006 hergestellt wurde und etwa 10 Masse% Kapselmaterial bestehend aus dem Reaktionsprodukt aus einem Polyisocyanat mit einem Carbodiimidisierungskatalysator enthält.
Die Ergebnisse der Brandprüfungen sind in Tabelle 4 aufgeführt.

Beispiel 23 (erfindungsgemäß)

Es wurde analog Beispiel 8 gearbeitet, wobei jedoch anstelle von ®Exolit 422
1125 g ®Exolit 470
eingesetzt wurden.
Die Ergebnisse der Brandprüfungen sind in der Tabelle 4 aufgeführt.
Die Ergebnisse der Brandtests mit den Vergleichsmaterialien Melamin, Cyanursäure, Melamincyanurat und Melamin/Formaldehyd-Harz (®Madurit MW 909) zeigen deutlich (siehe Tabellen 1 und 2), daß diese Zweierkombinationen mit Ammoniumpolyphosphat als Flammschutzmittel für Thermoplaste völlig ungeeignet sind.

Dagegen belegen die Ergebnisse mit der Kombination Ammoniumpolyphosphat/Tris-(2-hydroxyethyl)-isocyanurat die gute Wirksamkeit (siehe Tabellen 3 und 4). Bei einem Einsatz von 35 Teilen dieser Kombination auf 100 Teile Polypropylen wird die Einstufung in die Klasse UL 94 V-O bei einer Prüfstabdicke von 3,2 mm erreicht.

Ein Vergleich der für das erfindungsgemäße APP/THEIC-System ermittelten physikalischen Eigenschaften mit den entsprechenden, für typische halogenhaltige Flammschutzformulierungen sowie halogenfreie 3-Komponenten-Flammschutzformulierungen ermittelten Werten ergibt sich aus Tabelle 5. Gegenüber handelsüblichen Produkten zeichnen sich die APP/THEIC-Systeme Nr. 1, 2 und 3 durch ganz hervorragende Eigenschaften aus. Von den handelsüblichen, halogenhaltigen Formulierungen Nr. 5 und 6 unterscheiden sie sich durch eine bemerkenswert gute Zugfestigkeit, Biegefestigkeit und Kerbschlagzähigkeit bei nur geringer Rauchgasentwicklung und niedrigem Spezifischem Gewicht. Dagegen weisen die halogenfreien 3-Komponenten - Flammschutzformulierungen Nr. 7, 8 und 9 lediglich eine geringe Zugfestigkeit, Biegefestigkeit, Dehnungsfestigkeit und Kerbschlagzähigkeit auf.

7

TABELLE 1    Brandtest gemäß UL 94-Vertikaltest [1]

Sauerstoffindex gemäß ASTM-D 2863-74

| Beispiel | Flammschutzsystem | | UL-94-Vertikaltest | | Sauerstoff-Index | |
|---|---|---|---|---|---|---|
| | Art | Menge ... Teile/100 Teile PP [2] | 1,6 mm | 3,2 mm | 1,6 mm | 3,2 mm |
| 1 (Vergleich) | Exolit 422 Melamin | 30 10 | n.k. [3] | n.k. | 0.22 | 0.23 |
| 2 (Vergleich) | Exolit 422 Melamin | 20 20 | n.k. | n.k. | 0.22 | 0.22 |
| 3 (Vergleich) | Exolit 422 Melamin | 10 30 | n.k. | n.k | 0.20 | 0.21 |
| 4 (Vergleich) | Exolit 422 Cyanursäure | 30 10 | n.k. | n.k. | 0.19 | 0.20 |
| 5 (Vergleich) | Exolit 422 Cyanursäure | 20 20 | n.k. | n.k | 0.19 | 0.19 |
| 6 (Vergleich) | Exolit 422 Cyanursäure | 10 30 | n.k. | n.k. | 0.19 | 0.19 |

1) Underwriters Laboratories "Test for Flammability of Plastic Material-UL 94"
Probekörper: 127 mm Länge, 12,7 mm Breite und 1,6 mm bzw. 3,2 mm Dicke

2) PP = Polypropylen

3) n.k. = nicht klassifiziert als V-0, V-1 oder V-2

TABELLE 2      Brandtest gemäß UL 94-Vertikaltest [1]
               Sauerstoffindex gemäß ASTM-D 2863-74

| Beispiel | Flammschutzsystem | | UL-94-Vertikaltest | | Sauerstoff-Index | |
|---|---|---|---|---|---|---|
| | Art | Menge ... Teile/100 Teile PP [2] | 1,6 mm | 3,2 mm | 1,6 mm | 3,2 mm |
| 7 (Vergleich) | Exolit 422 Melamincyanurat | 30 10 | n.k. [3] | n.k. | 0.21 | 0.22 |
| 8 (Vergleich) | Exolit 422 Melamincyanurat | 20 20 | n.k. | n.k. | 0.20 | 0.20 |
| 9 (Vergleich) | Exolit 422 Melamincyanurat | 10 30 | n.k. | n.k. | 0.19 | 0.20 |
| 10 (Vergleich) | Exolit 422 Madurit MW 909 | 30 10 | n.k. | n.k. | 0.19 | 0.20 |
| 11 (Vergleich) | Exolit 422 Madurit MW 909 | 20 20 | n.k. | n.k. | 0.19 | 0.19 |
| 12 (Vergleich) | Exolit 422 Madurit MW 909 | 10 30 | n.k. | n.k. | 0.19 | 0.19 |

1)   Underwriters Laboratories "Test für Flammability of Plastic Material-UL 94"
     Probekörper: 127 mm Länge, 12,7 mm Breite und 1,6 mm bzw. 3,2 mm Dicke

2)   PP = Polypropylen

3)   n.k. = nicht klassifiziert als V-0, V-1 oder V-2

0 258 685

0 258 685

TABELLE 3      Brandtest gemäß UL 94-Vertikaltest [1]

Sauerstoffindex gemäß ASTM-D 2863-74

| Beispiel | Flammschutzsystem | | UL-94-Vertikaltest | | Sauerstoff-Index | |
| --- | --- | --- | --- | --- | --- | --- |
| | Art | Menge ... Teile/100 Teile PP [2] | 1,6 mm | 3,2 mm | 1,6 mm | 3,2 mm |
| 13 (erfindungsgemäß) | Exolit 422 THEIC [3] | 30 10 | V-2 | V-0 | 0.31 | 0.33 |
| 14 (erfindungsgemäß) | Exolit 422 THEIC | 20 20 | V-2 | V-1 | 0.27 | 0.28 |
| 15 (erfindungsgemäß) | Exolit 422 THEIC | 10 30 | n.k. [4] | n.k. | 0.25 | 0.26 |
| 16 (erfindungsgemäß) | Exolit 422 THEIC | 26,25 8,75 | n.k. | V-0 | 0.30 | 0.30 |
| 17 (erfindungsgemäß) | Exolit 422 THEIC | 17,5 17,5 | n.k. | n.k. | 0.27 | 0.27 |
| 18 (erfindungsgemäß) | Exolit 422 THEIC | 22,5 7,5 | n.k. | V-1 | 0.29 | 0.29 |
| 19 (erfindungsgemäß) | Exolit 422 THEIC | 15 15 | n.k. | n.k. | 0.25 | 0.26 |

1) Underwriters Laboratories "Test for Flammability of Plastic Material-UL 94"
   Probekörper: 127 mm Länge, 12,7 mm Breite und 1,6 mm bzw. 3,2 mm Dicke

2) PP = Polypropylen      3) THEIC = Tris(2-hydroxyethyl)-isocyanurat

4) n.k. = nicht klassifiziert als V-0, V-1 oder V-2

0 258 685

TABELLE 4     Brandtest gemäß UL 94-Vertikaltest [1]
Sauerstoffindex gemäß ASTM-D 2863-74

| Beispiel | Flammschutzsystem | | UL-94-Vertikaltest | | Sauerstoff-Index | |
| --- | --- | --- | --- | --- | --- | --- |
| | Art | Menge ...Teile/100 Teile PP[2] | 1,6 mm | 3,2 mm | 1,6 mm | 3,2 mm |
| 20 (erfindungsgemäß) | (R)Exolit 462 THEIC [3] | 26,25 8,75 | V - 2 | V - 0 | 0,28 | 0,29 |
| 21 (erfindungsgemäß) | (R)Exolit 462 THEIC | 22,5 7,5 | n.k. | V - 1 | 0,25 | 0,26 |
| 22 (erfindungsgemäß) | (R)Exolit 470 THEIC | 26,25 8,75 | V - 2 | V - 0 | 0,31 | 0,32 |
| 23 (erfindungsgemäß) | (R)Exolit 470 THEIC | 22,5 7,5 | n.k. | V - 1 | 0,26 | 0,27 |

1) Underwriters Laboratories "Test for Flammability of Plastic Material-UL 94"
   Probekörper: 127 mm Länge, 12,7 mm Breite und 1,6 mm bzw. 3,2 mm Dicke

2) PP = Polypropylen

3) THEIC = Tris(2-hydroxyethyl)-isocyanurat

4) n.k. = nicht klassifiziert als V - 0, V - 1 oder V - 2

0 258 685

TABELLE 5/1 — Physikalische Eigenschaften von flammwidrig ausgerüstetem Hostalen PPU 0180

| Formulierung (Masse %) | ASTM Methode | Einheit | 1 | 2 | 3 | 4 | 5 | 6 | 7 | 8 | 9 | V[1] |
|---|---|---|---|---|---|---|---|---|---|---|---|---|
| (R)Exolit 422 | | | 22,5 | 21,0 | 19,2 | 18 | | | 10,0 | 18,0 | 18,0 | |
| THEIC [2] | | | 7,5 | 7,0 | 6,4 | 12 | | | | | 6,0 | |
| Melamin | | | | | | | | | 10,0 | 6,0 | 6,0 | |
| Pentaerythrit | | | | | | | | | 10,0 | 6,0 | | |
| (R)Dechlorane + 25 [3] | | | | | | | 38,0 | | | | | |
| DBDPO [4] | | | | | | | | 25,0 | | | | |
| $Sb_2O_3$ | | | | | | | 4,0 | 8,0 | | | | |
| $ZnBO_3$ | | | | | | | 6,0 | | | | | |
| Stabilisator [5] | | | 2,8 | 2,8 | 2,8 | 2,8 | 2,8 | 2,8 | 2,8 | 2,8 | 2,8 | |
| Hostalen PPU 0180 | | | 67,2 | 69,2 | 71,5 | 67,2 | 49,2 | 64,2 | 67,2 | 67,2 | 67,2 | 100 |
| **Brandtests** | | | | | | | | | | | | |
| Sauerstoff-Index | D 2863 | % $O_2$ | 35,9 | 35,5 | 35,3 | 39,0 | 29,7 | 26,4 | 36,0 | 33,2 | 35,8 | 17,6 |
| UL-94 Klasse (bei 3,2 mm Probendicke) | | | V-0 | V-0 | V-0 | V-0 | V-0 | V-0 | V-0 | V-1 | V-0 | n.k. [6] |
| Durchschnittl. Brenndauer | | s | 1,1 | 1,5 | 2,3 | 1,0 | 2,4 | 1,9 | 1,2 | 5,4 | 0,9 | brennt ab |
| Rauchgasdichte [7] | | % Lichtdurchlässigkeit | 97% | 97% | 97% | 97% | 75% | 60% | 96% | 96% | 96% | 99% |

TABELLE 5/2 (Fortsetzung)

| Formulierung | | | 1 | 2 | 3 | 4 | 5 | 6 | 7 | 8 | 9 | V[1] |
|---|---|---|---|---|---|---|---|---|---|---|---|---|
| Physikal. Eigenschaften | ASTM Methode | Einheit | | | | | | | | | | |
| Formbeständigkeitstemperatur | D-648 | °C bei 1,8 $MN/m^2$ Biegespannung | 58,2 | 55,6 | 54,1 | 47,5 | 54,0 | 54,7 | 45,7 | 45,7 | 66,7 | 50,2 |
| Zugfestigkeit | D-638 | $MN/m^2$ (x10) | 2,4 | 2,7 | 2,7 | 2,7 | 3,3 | 2,0 | 2,2 | 2,4 | 2,7 | 3,0 |
| Zugdehnung | D-638 | % | 10,4 | 11,2 | 12,3 | 12,3 | 10,4 | 16,1 | 7,5 | 10,3 | 7,3 | 16,5 |
| Biegefestigkeit | D-790 | $MN/m^2$ (x10) | 8,4 | 7,8 | 8,1 | 7,7 | 7,6 | 3,3 | 2,4 | 2,2 | 6,0 | 8,2 |
| Biege-E-Modul | D-790 | $MN/m^2$ (x100) | 6,6 | 6,2 | 5,9 | 6,7 | 6,7 | 7,6 | 5,8 | 5,8 | 4,6 | 4,1 |
| Kerbschlagzähigkeit nach Izod | D-256E | J/m | 18,9 | 20,5 | 22,0 | 13,9 | 9,2 | 21,2 | 14,8 | 15,1 | 11,8 | 40,5 |
| Shore Härte D | D-2240 | D-Skala | 64,7 | 72,0 | 64,7 | 70,7 | 74,0 | 72,0 | 70,0 | 70,7 | 72,3 | 69,3 |
| Spezif. Gewicht | | g/ml | 1,06 | 1,05 | 1,03 | 1,06 | 1,26 | 1,20 | 1,03 | 1,05 | 1,05 | 0,9 |

1) V = Vergleich ohne Flammschutzmittelzusatz

2) THEIC = Tris(2-hydroxyethyl)-isocyanurat

3) $^{(R)}$Dechlorane + 25, Firma Hooker, ist ein chloriertes alicyclisches Flammschutzmittel

4) Decabromdiphenyloxid

5) $TiO_2$/Hostanox 03/Hostanox SE-10/Hostanox PAR 24/Ca-Stearat

6) n.k. = nicht klassifiziert als V-0, V-1 oder V-2

7) % Lichtdurchlässigkeit gemessen mittels der Optischen Dichte

0 258 685

## Ansprüche

1. Flammwidrige polymere Massen, die ein Intumeszenz-Flammschutzsystem aus einer Phosphorkomponente und einer organischen Stickstoffkomponente enthalten, dadurch gekennzeichnet, daß das Flammschutzsystem aus einem Zweiergemisch aus Ammoniumpolyphosphat und Tris-(2-hydroxyethyl)-isocyanurat gebildet wird.

2. Flammwidrige polymere Massen nach Anspruch 1, dadurch gekennzeichnet, daß das Ammoniumpolyphosphat 0,5 bis 25 Masse% eines wasserunlöslichen, gegebenenfalls gehärteten Kunstharzes, welches die einzelnen Ammoniumpholyphosphatteilchen umhüllt, enthält.

3. Flammwidrige polymere Massen nach Anspruch 1, dadurch gekennzeichnet, daß das Ammoniumpolyphosphat 0,5 bis 25 Masse% eines Reaktionsproduktes aus einem Polyisocyanat mit einem Carbodiimidisierungskatalysator, wobei das Polycarbodiimid die einzelnen Ammoniumpolyphosphatteilchen umhüllt, enthält.

4. Flammwidrige polymere Massen nach Anspruch 1, dadurch gekennzeichnet, daß das Ammoniumpolyphosphat 0,5 bis 25 Masse% eines Reakttionsproduktes aus einem Polyisocyanat und einer Polyhydroxyverbindung, wobei das gebildete Polyurethan die einzelnen Ammoniumpolyphosphatteilchen umhüllt, enthält.

5. Flammwidrige polymere Massen nach Anspruch 1, dadurch gekennzeichnet, daß das Ammoniumpolyphoshat 0,5 bis 25 Masse% eines Reaktionsproduktes aus einem Polyisocyanat mit einem Trimerisierungskatalysator, wobei das gebildete Polyisocyanurat die einzelnen Ammoniumpolyphosphatteilchen umhüllt, enthält.

6. Flammwidrige polymere Massen nach Anspruch 1, dadurch gekennzeichnet, daß das Ammoniumpolyphosphat 0,5 bis 25 Massse% eines Reaktionsproduktes aus einem Polyisocyanat und Wasser, wobei der gebildete Polyharnstoff die einzelnen Ammoniumpolyphosphatteilchen umhüllt, enthält.

7. Flammwidrige polymere Massen nach Anspruch 1, dadurch gekennzeichnet, daß das Ammoniumpolyphosphat 0,5 bis 25 Masse% eines gehärteten Melamin/Formaldehyd-Harzes, wobei das Melamin/Formaldehyd-Harz die einzelnen Ammoniumpolyphosphatteilchen umhüllt, enthält.

8. Flammwidrige polymere Massen nach Anspruch 1, dadurch gekennzeichnet , daß das Ammoniumpolyphosphat 0,5 bis 25 Masse% eines gehärteten Epoxidharzes, wobei das Epoxidharz die einzelnen Ammoniumpolyphoshatteilchen umhüllt, enthält.

9. Flammwidrige polymere Massen nach einem der vorhergehenden Ansprüche, dadurch gekennzeichnet, daß das Flammschutzsystem aus 80 bis 50 Masse% Ammoniumpolyphosphat und 20 bis 50 Masse% Tris-(2-hydroxyethyl)-isocyanurat besteht.

10. Flammwidrige polymere Massen nach einem der vorhergehenden Ansprüche, dadurch gekennzeichnet, daß ein freifließendes, pulverförmiges, in Wasser schwer lösliches Ammoniumpolyphosphat der Formel $(NH_4PO_3)_n$, wobei n 200 bis 1000, vorzugsweise etwas 700, ist, eingesetzt wird.

11. Flammwidrige polymere Massen nach einem der vorhergehenden Ansprüche, dadurch gekennzeichnet. daß das Ammoniumpolyphosphat eine Teilchengröße von > 99 % < 45 $\mu$m besitzt.

12. Flammwidrige polymere Massen nach einem der vorhergehenden Ansprüche, dadurch gekennzeichnet, daß sie 15 bis 40 Masse% an dem Flammschutzsystem enthalten.

13. Flammwidrige polymeres Massen nach einem der vorhergehenden Ansprüche. dadurch gekennzeichnet , daß sie Thermoplaste sind.

14. Flammwidrige polymere Massen nach Anspruch 13, dadurch gekennzeichnet, daß die Thermoplaste Polyolefine sind.